(19) Europäisches Patentamt
European Patent Office
Office européen des brevets

(11) **EP 4 456 178 A1**

(12) **EUROPEAN PATENT APPLICATION**
published in accordance with Art. 153(4) EPC

(43) Date of publication:
**30.10.2024  Bulletin 2024/44**

(21) Application number: **21968692.0**

(22) Date of filing: **24.12.2021**

(51) International Patent Classification (IPC):
***H01M 4/134*** *(2010.01)*

(52) Cooperative Patent Classification (CPC):
Y02E 60/10

(86) International application number:
**PCT/CN2021/141317**

(87) International publication number:
**WO 2023/115563 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Zhangwan Town, Jiaocheng District
Ningde City
Fujian 352100 (CN)**

(72) Inventor: **LIAO, Qunchao
Ningde City, Fujian 352100 (CN)**

(74) Representative: **Icosa
83 avenue Denfert-Rochereau
75014 Paris (FR)**

(54) **ELECTROCHEMICAL DEVICE AND ELECTRONIC DEVICE**

(57)    This application provides an electrochemical device and an electronic device. The electrochemical device includes a negative electrode plate. The negative electrode plate includes a negative active material layer. The negative active material layer includes a silicon-based material particle and a binder. The negative electrode plate satisfies: (B + C)/7 < A < (B + C)/1.8, where A denotes a weight loss rate of the negative active material layer of the negative electrode plate heated to 480 °C in an argon atmosphere, expressed by a mass percent; B denotes a fluctuation value of a relative mass percent of silicon in the silicon-based material particle; and C denotes a mass percent of silicon in the negative electrode plate. By making the negative electrode plate satisfy (B + C)/7 < A < (B + C)/1.8, this application can significantly improve the cycle performance, C-rate performance, and expansion resistance of the electrochemical device.

**EP 4 456 178 A1**

**Description**

**TECHNICAL FIELD**

This application relates to the field of electrochemical energy storage, and in particular, to an electrochemical device and an electronic device.

**BACKGROUND**

With the development and progress of electrochemical devices (such as a lithium-ion battery), higher requirements have been posed on the cycle performance and energy density of the electrochemical devices. Currently, the use of a silicon-based material in a negative electrode plate is a megatrend in improving the energy density of an electrochemical device. However, in a process of lithium intercalation and deintercalation of the silicon-based material, the material expands and shrinks considerably in volume, thereby forming a large number of new solid electrolyte interphase (SEI) films. The formation of the films consumes limited lithium ions and electrolyte solution in the electrochemical device, significantly increases the impedance of the electrochemical device, and hinders massive applications of the silicon-based material in the industry.

**SUMMARY**

Some embodiments of this application provide an electrochemical device. The electrochemical device includes a negative electrode plate. The negative electrode plate includes a negative active material layer. The negative active material layer includes a silicon-based material particle and a binder. The negative electrode plate satisfies: $(B + C)/7 < A < (B + C)/1.8$, where A denotes a weight loss rate of the negative active material layer of the negative electrode plate heated to 480 °C in an argon atmosphere, expressed by a mass percent; B denotes a fluctuation value of a relative mass percent of silicon in the silicon-based material particle; and C denotes a mass percent of silicon in the negative electrode plate. By making the negative electrode plate satisfy $(B + C)/7 < A < (B + C)/1.8$, this application can significantly improve the cycle performance, C-rate performance, and expansion resistance of the electrochemical device.

In some embodiments, the weight loss rate A of the negative active material layer of the negative electrode plate heated to 480 °C in an argon atmosphere satisfies: $1.5\% \leq A \leq 18\%$. If the value of A is overly large, the amount of binder in the negative active material layer is overly large, thereby suppressing transmission of lithium ions, intensifying polarization of the electrochemical device, and deteriorating the C-rate performance of the electrochemical device. If the value of A is overly small, the amount of binder in the negative active material layer is overly small, thereby being unfavorable to alleviating the volume expansion of the silicon-based material during cycling, and deteriorating the cycle performance of the electrochemical device.

In some embodiments, the fluctuation value B of the relative mass percent of silicon in the silicon-based material particle satisfies: $B < 16\%$. If B is overly large, the homogeneity of silicon is low, thereby being unfavorable to improving the cycle performance and expansion resistance of the electrochemical device.

In some embodiments, the mass percent C of silicon in the negative electrode plate satisfies: $1\% \leq C \leq 20\%$. If the value of C is overly large, the expansion of the silicon-based material during cycling is overly large, thereby being unfavorable to improving the cycle performance of the electrochemical device. If the value of C is overly small, the small value of C is unfavorable to increasing the energy density of the electrochemical device.

In some embodiments, a porosity P of the negative electrode plate and the mass percent C of silicon in the negative electrode plate satisfy: $P \geq 15 \times C^{1/4}$. When the mass percent C of silicon in the negative electrode plate is higher, more pores are required to alleviate the expansion of the silicon-based material. When the value of P satisfies $P \geq 15 \times C^{1/4}$, the volume expansion of the silicon-based material can be effectively alleviated.

In some embodiments, the porosity P of the negative electrode plate satisfies: $18\% \leq P \leq 40\%$. When the porosity of the negative electrode plate is overly low, the electrolyte solution can hardly infiltrate the negative electrode plate sufficiently, thereby increasing the transmission distance of lithium ions, deteriorating the kinetic performance of the electrochemical device, and being unfavorable to alleviating the expansion of the silicon-based material during the cycling. If the porosity of the negative electrode plate is overly high, the high porosity is unfavorable to increasing the energy density of the electrochemical device.

In some embodiments, the electrochemical device further includes an electrolyte solution. The electrolyte solution includes fluoroethylene carbonate. A mass percent X of the fluoroethylene carbonate and the mass percent C of silicon in the negative electrode plate satisfy: $X \geq C$. When the mass percent of the FEC in the electrolyte solution is greater than or equal to the mass percent of silicon in the negative electrode plate, the electrochemical device is superior in cycle performance, expansion resistance, and C-rate performance.

In some embodiments, the mass percent X of the fluoroethylene carbonate satisfies: $2\% \leq X \leq 20\%$. When the

value of X is overly small, the effect of the fluoroethylene carbonate in improving the cycle performance of the electrochemical device is limited. When the value of X is overly large, the mass percent of the FEC is overly high, and the excessive FEC reduces the mobility of lithium ions in the electrolyte solution and impairs the C-rate performance of the electrochemical device.

In some embodiments, the silicon-based material particle includes silicon and carbon. By embedding the silicon-based particles into a carbon matrix, direct contact between the silicon-based particle and the electrolyte solution is avoided, thereby reducing repeated generation of SEI films during cycling, and in turn, reducing the loss of reversible lithium.

An embodiment of this application further provides an electronic device, including the electrochemical device.

In an embodiment of this application, by making the negative electrode plate satisfy (B + C)/7 < A < (B + C)/1.8, from perspective of the electrode plate, the expansion of the silicon-based material can be limited to a range tolerable to the electrode plate, and the resistance to expansion and deformation of the electrochemical device is improved significantly; from perspective of the material, the expansion of the silicon-based material caused by lithiation is reduced, the repeated generation and disruption of the SEI films on the surface of the silicon-based particle are reduced, and the cycle performance and C-rate performance of the electrochemical device are improved significantly.

## DETAILED DESCRIPTION

The following embodiments enable a person skilled in the art to understand this application more comprehensively, but without limiting this application in any way.

Some embodiments of this application provide an electrochemical device. The electrochemical device includes a negative electrode plate. In some embodiments, a negative electrode plate includes a negative active material layer. The negative active material layer includes a silicon-based material particle and a binder. In some embodiments, the binder can bind the silicon-based material particles together to reduce the expansion and shrinkage extent of the silicon-based material particles during cycling.

In some embodiments, the negative electrode plate satisfies: (B + C)/7 < A < (B + C)/1.8, where A denotes a weight loss rate of the negative active material layer of the negative electrode plate heated to 480 °C in an argon atmosphere, expressed by the mass percent; B denotes a fluctuation value of a relative mass percent of silicon in the silicon-based material particle; and C denotes a mass percent of silicon in the negative electrode plate. In some embodiments, the value of A reflects the amount of binder to some extent. The larger the value of A, the larger the amount of binder in the negative active material layer; the smaller the value of A, the smaller the amount of binder in the negative active material layer. To reduce deformation of the electrochemical device during cycling, a sufficient amount of binder may exist in the negative electrode plate. However, an overly large amount of binder may suppress lithium ion transport, intensify polarization of the electrochemical device, and deteriorate C-rate performance of the electrochemical device. In some embodiments, the fluctuation value of the relative mass percent of silicon in the silicon-based material particle denotes homogeneity of silicon distribution. The larger the fluctuation value, the lower the homogeneity. The homogeneity of the silicon distribution is strongly related to the cycle performance and expansion resistance of the electrochemical device. The higher the homogeneity, the lower the stress generated by the expansion of the lithium-ion battery, and the higher the cycle performance and expansion resistance of the electrochemical device. In some embodiments, generally, the energy density of the electrochemical device can be increased with the increase of the mass percent of silicon in the negative electrode plate. By making the negative electrode plate satisfy (B + C)/7 < A < (B + C)/1.8, this application can significantly improve the cycle performance, C-rate performance, and expansion resistance of the electrochemical device.

In some embodiments, the weight loss rate A of the negative active material layer of the negative electrode plate heated to 480 °C in an argon atmosphere satisfies: 1.5% ≤ A ≤ 18%. If the value of A is overly large, the amount of binder in the negative active material layer is overly large, thereby suppressing transmission of lithium ions, intensifying polarization of the electrochemical device, and deteriorating the C-rate performance of the electrochemical device. If the value of A is overly small, the amount of binder in the negative active material layer is overly small, thereby being unfavorable to alleviating the volume expansion of the silicon-based material during cycling, and deteriorating the cycle performance of the electrochemical device. In some embodiments, the value of A may be 1.5%, 5%, 8%, 12%, 15%, 18%, or any other appropriate value.

In some embodiments, the fluctuation value B of the relative mass percent of silicon in the silicon-based material particle satisfies: B < 16%. If B is overly large, the homogeneity of silicon is low, thereby being unfavorable to improving the cycle performance and expansion resistance of the electrochemical device. In some embodiments, the value of B may be 15%, 10%, 8%, 5%, or less.

In some embodiments, the mass percent C of silicon in the negative electrode plate satisfies: 1% ≤ C ≤ 20%. In some embodiments, if the value of C is overly large, the expansion of the silicon-based material during cycling is overly large, thereby being unfavorable to improving the cycle performance of the electrochemical device. If the value of C is overly small, the small value of C is unfavorable to increasing the energy density of the electrochemical device. In some embodiments, the value of C may be 1%, 5%, 10%, 15%, 20%, or any other appropriate value.

In some embodiments, a porosity P of the negative electrode plate and the mass percent C of silicon in the negative electrode plate satisfy: $P \geq 15 \times C^{1/4}$. The volume expansion of the silicon-based material particle is approximately 300% after lithiation at a normal temperature. The huge volume expansion effect is prone to cause problems such as negative electrode plate debonding and powder shedding. Reserving a specified number of pores in the negative electrode plate can effectively alleviate the volume expansion of the silicon-based material. When the mass percent C of silicon in the negative electrode plate is higher, more pores are required to alleviate the expansion of the silicon-based material. When the value of P satisfies $P \geq 15 \times C^{1/4}$, the volume expansion of the silicon-based material can be effectively alleviated.

In some embodiments, the porosity P of the negative electrode plate satisfies: $18\% \leq P \leq 40\%$. When the porosity of the negative electrode plate is overly low, the electrolyte solution can hardly infiltrate the negative electrode plate sufficiently, thereby increasing the transmission distance of lithium ions, deteriorating the kinetic performance of the electrochemical device, and being unfavorable to alleviating the expansion of the silicon-based material during the cycling. If the porosity of the negative electrode plate is overly high, the high porosity is unfavorable to increasing the energy density and kinetic performance of the electrochemical device.

In some embodiments, the electrochemical device further includes an electrolyte solution. The electrolyte solution is reduced at the negative electrode plate to generate an SEI layer on the surface of the negative active material to stabilize the interface and defer continuous depletion of reversible lithium. An overly thin SEI film is prone to rupture during expansion of the negative active material particle to generate a new interface, thereby deteriorating the cycle performance of the electrochemical device. An overly thick SEI film reduces the charge transfer rate and deteriorates the C-rate performance of the electrochemical device. In some embodiments, the electrolyte solution includes fluoroethylene carbonate. A mass percent X of the fluoroethylene carbonate and the mass percent C of silicon in the negative electrode plate satisfy: $X \geq C$. The fluoroethylene carbonate (FEC) is an important film-forming additive in the electrolyte solution. The SEI film generated by decomposition during cycling isolates the negative active material from the electrolyte solution and precludes further contact, thereby reducing depletion of lithium-ions, and improving the cycle performance. When the mass percent of the FEC in the electrolyte solution is greater than or equal to the mass percent of silicon in the negative electrode plate, the electrochemical device is superior in cycle performance, expansion resistance, and C-rate performance.

In some embodiments, the mass percent X of the fluoroethylene carbonate satisfies: $2\% \leq X \leq 20\%$. When the value of X is overly small, the effect of the fluoroethylene carbonate in improving the cycle performance of the electrochemical device is limited. When the value of X is overly large, the mass percent of the FEC is overly high, and the excessive FEC reduces the mobility of lithium ions in the electrolyte solution and impairs the C-rate performance of the electrochemical device. In some embodiments, the value of X may be 2%, 5%, 10%, 12%, 15%, 20%, or any other appropriate value.

In some embodiments, the silicon-based material particle includes silicon and carbon, for example, a silicon-carbon compound or composite such as SiC. By embedding the silicon-based particles into a carbon matrix, direct contact between the silicon-based particle and the electrolyte solution is avoided, thereby reducing repeated generation of SEI films during cycling, and in turn, reducing the loss of reversible lithium.

In some embodiments, a method for preparing the silicon-based material may include: Placing a porous carbon matrix into a rotary furnace, blowing the furnace tube with a nitrogen gas at a room temperature for 20 to 40 minutes, and then increasing the temperature of the porous carbon matrix specimen to 450 °C to 500 °C; adjusting the nitrogen flow rate so that the nitrogen gas is retained in the rotary furnace for at least 90 seconds, and keeping this flow rate for approximately 30 minutes; switching the gas supply from nitrogen to a mixture of a silicon-containing gas and nitrogen (the volume fraction of the silicon-containing gas in the mixture is 5% to 30%); depositing a precipitate for 8 hours to 16 hours at a gas flow rate of 200 sccm to 400 sccm, passing a nitrogen gas into the rotary furnace continuously, blowing out the silicon-containing gas from the furnace, and then blowing the rotary furnace with the nitrogen gas for 30 minutes, and then cooling the rotary furnace down to a room temperature over a period of 5 hours to 10 hours; converting the gas flow from the nitrogen gas to air that comes from a compressed air source, so that the nitrogen gas in the rotary furnace is gradually converted into air over a period of 1 hour to 2 hours and a silicon-based material is obtained.

In some embodiments, the porous carbon matrix may be at least one selected from hard carbon, soft carbon, or graphite. For example, the hard carbon may include resin carbon, carbon black, organic polymeric pyrolytic carbon, or a combination thereof. The soft carbon may include carbon fibers, carbon microspheres, or a combination thereof. The particle diameter of the porous carbon matrix is not particularly limited, as long as the objectives of this application can be achieved. For example, the particle diameter of the porous carbon matrix falls within: $3\ \mu m < D_{v50} < 15\ \mu m$.

The weight loss rate A of the negative active material layer of the negative electrode plate heated to 480 °C in an argon atmosphere is related to the amount of binder in the negative active material layer. For example, the larger the amount of binder used in the negative active material layer, the larger the value of A; the smaller the amount of binder used in the negative active material layer, the smaller the value of A. Based on this, the value of A may be adjusted by adjusting the amount of binder.

The fluctuation value B of the relative mass percent of silicon in the silicon-based material particle is related to the homogeneity of pore distribution inside the carbon matrix and the pore size. For example, the more homogeneous the pore distribution in the carbon matrix, the smaller the value of B. Based on this, the value of B may be adjusted by adjusting the pore distribution and the pore size.

The mass percent C of silicon in the negative electrode plate is related to the amount of the silicon-based material added in the negative active material layer. The content of silicon deposited inside the silicon-based material may be adjusted by adjusting the deposition temperature, the deposition time, and the concentration of the silicon-containing gas. For example, C typically increases with the rise of the deposition temperature, C typically increases with the increase of the deposition time, and C typically increases with the rise of the concentration of the silicon-containing gas. Based on this, the mass percent C of silicon in the negative electrode material layer can be adjusted.

The porosity of the negative electrode plate typically decreases with the increase of the compaction density of the negative electrode plate. Based on this, the compaction density of the negative electrode plate may be adjusted by adjusting the cold-press pressure on the negative electrode plate, thereby adjusting the porosity of the negative electrode plate.

In some embodiments, the binder in the negative active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene.

In some embodiments, the electrochemical device may include an electrode assembly. The electrode assembly includes a positive electrode plate, a negative electrode plate, and a separator disposed between the positive electrode plate and the negative electrode plate. In some embodiments, the negative electrode plate further includes a negative current collector. In some embodiments, the negative active material layer may be located on one side or both sides of the negative current collector. In some embodiments, the negative active material layer may further include a conductive agent. In some embodiments, the conductive agent in the negative active material layer may include at least one of nanoscale conductive carbon black, carbon nanotubes, carbon fibers, or flake graphite, graphene, or Ketjen black. In some embodiments, the negative active material layer may further include a negative active material graphite. In other words, the negative active material layer may include a silicon-based material and graphite used as negative active materials. In some embodiments, a mass ratio between the negative active material, the conductive agent, and the binder in the negative active material layer may be (78 to 98.5): (0.1 to 10): (0.1 to 10). Understandably, the materials and mass ratio specified above are merely exemplary, and any other appropriate materials and mass ratio may be used instead. In some embodiments, the negative current collector may be at least one of a copper foil, a nickel foil, or a carbon-based current collector.

In some embodiments, the positive electrode plate includes a positive current collector and a positive active material layer disposed on the positive current collector. The positive active material layer may include a positive active material. In some embodiments, the positive active material includes at least one of lithium cobalt oxide, lithium iron phosphate, lithium iron manganese phosphate, sodium iron phosphate, lithium vanadium phosphate, sodium vanadium phosphate, lithium vanadyl phosphate, sodium vanadyl phosphate, lithium vanadium oxide, lithium manganese oxide, lithium nickel oxide, lithium nickel cobalt manganese oxide, lithium-rich manganese-based material, or lithium nickel cobalt aluminum oxide. In some embodiments, the positive active material layer may further include a conductive agent. In some embodiments, the conductive agent in the positive active material layer may include at least one of conductive carbon black, Ketjen black, graphite flakes, graphene, carbon nanotubes, or carbon fiber. In some embodiments, the positive active material layer may further include a binder. The binder in the positive active material layer may include at least one of carboxymethyl cellulose (CMC), polyacrylic acid, polyvinylpyrrolidone, polyaniline, polyimide, polyamideimide, polysiloxane, styrene butadiene rubber, epoxy resin, polyester resin, polyurethane resin, or polyfluorene. In some embodiments, a mass ratio of the positive active material, the conductive agent, and the binder in the positive active material layer may be (80 to 99): (0.1 to 10): (0.1 to 10). In some embodiments, the thickness of the positive active material layer may be 10 $\mu$m to 500 $\mu$m. Understandably, what is described above is merely an example, and the positive active material layer may adopt any other appropriate material, thickness, and mass ratio.

In some embodiments, the positive current collector may be an aluminum foil, or may be another current collector commonly used in the art. In some embodiments, the thickness of the positive current collector may be 1 $\mu$m to 50 $\mu$m. In some embodiments, the positive active material layer may be applied on just a partial region of the positive current collector.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, a thickness of the separator falls within a range of approximately 3 $\mu$m to

20 μm.

In some embodiments, a surface of the separator may further include a porous layer. The porous layer is disposed on at least one surface of the separator. The porous layer includes inorganic particles and a binder. The inorganic particles are at least one selected from aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, and barium sulfate. In some embodiments, a diameter of a pore of the separator is within a range of approximately 0.01 μm to 1 μm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments, the electrolyte solution further includes a lithium salt. The lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. Preferably, the lithium salt includes $LiPF_6$.

In some embodiments, the electrolyte solution may further include a nonaqueous solvent. The nonaqueous solvent may be a carbonate compound, a carboxylate compound, an ether compound, another organic solvent, or any combination thereof. The carbonate compound may be a chain carbonate compound, a cyclic carbonate compound, a fluorocarbonate compound, or any combination thereof. Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof. Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof. Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof. Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or any combination thereof. The mass percent of the nonaqueous solvent is not particularly limited herein, as long as the objectives of this application can be achieved. For example, the mass percent of the other nonaqueous solvent is 67% to 86%, for example, may be 67%, 67.5%, 70%, 75%, 80%, 83%, 85%, 85.5%, 86%, or a value falling within a range formed by any two thereof.

In some embodiments of this application, the electrochemical device includes, but is not limited to, a lithium-ion battery.

In some embodiments of this application, the electrode assembly of the electrochemical device is a jelly-roll electrode assembly, a stacked electrode assembly, or a folded electrode assembly. In some embodiments, the positive electrode plate and/or negative electrode plate of the electrochemical device may be a multi-layer structure formed by winding or stacking, or may be a single-layer structure formed by stacking a single layer of positive electrode, a separator, and a single layer of negative electrode.

In some embodiments of this application, using a lithium-ion battery as an example, the lithium-ion battery is prepared by: winding or stacking the positive electrode plate, the separator, and the negative electrode plate sequentially into an electrode assembly, loading the electrode assembly into, for example, an aluminum laminated film for packaging, injecting an electrolyte solution, and performing formation and packaging. Subsequently, a performance test is performed on the prepared lithium-ion battery.

A person skilled in the art understands that the method for preparing the electrochemical device (such as a lithium-ion battery) described above is merely an example. To the extent not departing from the content disclosed herein, other methods commonly used in the art may be employed.

An embodiment of this application further provides an electronic device containing the electrochemical device. The electronic device according to this embodiment of this application is not particularly limited, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Some specific embodiments and comparative embodiments are enumerated below to give a clearer description of this application, using a lithium-ion battery as an example.

**Comparative Embodiment 1-1**

**Preparing a positive electrode plate:** Mixing lithium cobalt oxide as a positive active material, conductive carbon black (Super P), and polyvinylidene difluoride (PVDF) at a weight ratio of 97: 1.4: 1.6, adding N-methyl pyrrolidone (NMP) as a solvent, and stirring evenly. Coating a positive current collector aluminum foil with the slurry (with a solid content of 72 wt%) evenly until the thickness of the coating reaches 80 $\mu$m. Drying the aluminum foil at 85 °C, then performing cold pressing, cutting, and slitting, and then drying the aluminum foil under an 85 °C vacuum condition for 4 hours to obtain a positive electrode plate.

**Preparing a silicon-based composite material:** Placing a porous carbon matrix with a $D_{v50}$ of 10 $\mu$m into a rotary furnace, blowing the furnace tube with a nitrogen gas at a room temperature for 30 minutes, and then increasing the heating temperature of the porous carbon specimen to 450 °C; adjusting the nitrogen flow rate so that the nitrogen gas is retained in the rotary furnace for at least 90 seconds, and keeping this flow rate for 30 minutes; switching the gas supply from nitrogen to a mixture of a silicon-containing gas (such as silane) and nitrogen gas, where the volume ratio between the silicon-containing gas and the nitrogen gas in the mixture is 5: 95; depositing a precipitate for 8 hours at a gas flow rate of 200 sccm, passing a nitrogen gas into the rotary furnace continuously, blowing out the silicon-containing gas from the furnace, and then blowing the rotary furnace with the nitrogen gas for 30 minutes, and then cooling the rotary furnace down to a room temperature over a period of several hours (such as 8 hours); converting the gas flow from the nitrogen gas to air that comes from a compressed air source, so that the nitrogen gas in the rotary furnace is gradually converted into air over a period of 2 hours and a silicon-based composite material, that is, silicon-based particle, is obtained. As measured, the fluctuation value B of the relative mass percent of silicon in the silicon-based material particle is 10%.

**Preparing a negative electrode plate:** Dissolving the above-prepared silicon-based material, artificial graphite, polyacrylic acid as a binder, and sodium carboxymethyl cellulose (CMC) at a mass ratio of 5.7: 91.8: 1: 1.5 in deionized water to form a negative electrode slurry (in which the solid content is 40 wt%). Using a 10 $\mu$m-thick copper foil as a negative current collector. Coating the negative current collector with the negative electrode slurry for a thickness of 50 $\mu$m. Drying the slurry at 85 °C, and then performing cold pressing, cutting, and slitting. Drying the current collector under a 120 °C vacuum condition for 12 hours to obtain a negative electrode plate.

**Preparing a separator:** Using a 7 $\mu$m-thick polyethylene (PE) film as a separator.

**Preparing an electrolyte solution:** Mixing ethylene carbonate (EC), propylene carbonate (PC), and diethyl carbonate (DEC) in a dry argon atmosphere glovebox at a mass ratio of EC: PC: DEC = 1: 1: 1, dissolving and thoroughly stirring the constituents, and then adding a lithium salt $LiPF_6$. Stirring well to obtain an electrolyte solution, in which the mass percent of $LiPF_6$ is 12.5%.

**Preparing a lithium-ion battery:** Stacking the positive electrode plate, the separator, and the negative electrode plate sequentially in such a way that the separator is located between the positive electrode and the negative electrode to serve a function of separation, and winding the stacked materials to obtain an electrode assembly. Putting the electrode assembly into an outer package made of an aluminum laminated film, dehydrating the electrode assembly at 80 °C, injecting the electrolyte solution, and sealing the package. Performing steps such as chemical formation, degassing, and edge trimming to obtain a lithium-ion battery.

The steps in other embodiments and comparative embodiments are the same as those in Comparative Embodiment 1-1 except changed parameter values. Specific changed parameter values are shown in the following table.

The following describes the test method of each parameter in this application.

1. Testing the porosity of the negative electrode plate: Testing the porosity of the negative electrode plate by a gas displacement method: Die-cutting more than 50 electrode plates by use of the same die to obtain disc specimens that each possess a radius of d; measuring the thickness h of each specimen, putting the specimen into a specimen cup of an AccuPyc II 1340 true density tester; filling the specimen with helium (He) in the airtight specimen chamber to obtain a true volume V of the specimen; and finally, calculating the porosity P of the specimen as: $P = (1 - V/\pi d^2 \times 50 \times h) \times 100\%$.

2. Testing the silicon content in the negative electrode plate: Putting a negative electrode plate into a 100 °C vacuum oven for drying for 24 hours, scraping off a part of active material layer from the negative electrode plate by use of a scraper, and weighing the mass of the scraped active material layer as $M_1$, and then putting the scraped active material layer into a sustained air atmosphere for heat treatment at 800 °C to remove the carbonaceous material. Weighing the mass of the remaining material as $M_2$, and finally calculating the silicon content C in the electrode plate as: $C = 0.467 \times M_2/M_1$.

3. Testing the fluctuation value of relative mass percent of silicon in the silicon-based material particle: Drying an electrode plate in a vacuum oven at 100 °C for 24 hours, and processing the silicon-based material particles in the electrode plate into a thin slice of 50 to 100 nm in thickness by use of a focused ion beam (FIB) in a protective atmosphere, and then determining the relative mass percent of silicon atoms in the silicon-based particle by using an energy dispersive X-ray spectrometer (EDS) line scan function in a transmission electron microscope (TEM). The line scan position is any position inside the silicon-based particle, and the fluctuation value of the silicon element is a difference between a maximum value and a minimum value of the relative mass percent of silicon atoms throughout the line scan region.

4. Testing the content of fluoroethylene carbonate (FEC) in the electrolyte solution: Discharging an electrochemical device until the State-of-Charge (SOC) reaches 0%, and then centrifuging the electrochemical device to obtain a liquid. Performing a GC-MS test on the liquid to determine the mass percent of the FEC.

5. Testing the weight loss rate of the negative active material layer heated to 480 °C in an argon atmosphere, expressed by the mass percent: Scraping off a part of active material layer from the negative electrode plate by use of a scraper, and weighing the mass of the scraped active material layer as $A_1$, and then putting the scraped active material layer into an argon atmosphere for heating up until 480 °C. Weighing the mass of the remaining material as $A_2$, and calculating the weight loss rate as: $A = (A_1-A_2)/A_1$.

6. Testing the cycle performance: Charging the battery at a constant current of 0.7C at a temperature of 25 °C and -10 °C separately until the voltage reaches 4.4 V, and then charging the battery at a constant voltage until the current reaches 0.025C, leaving the battery to stand for 5 minutes, and then discharging the battery at a current of 0.5C until the voltage reaches 3.0 V Using the capacity obtained at this time as an initial capacity. Repeating the above operations of charging the battery at 0.7C and then discharging the battery at 0.5C at a temperature of 25 °C and -10 °C separately for 400 cycles, and recording the capacity measured at this time as an actual capacity. Calculating the capacity retention rate as: capacity retention rate = actual capacity/initial capacity.

7. Testing the C-rate performance: Discharging the battery at a 0.2C current rate at 25 °C until the voltage reaches 3.0 V, leaving the battery to stand for 5 minutes, and then charging the battery at 0.5C until the voltage reaches 4.45 V; charging the battery at a constant voltage until the current reaches 0.05C, and then leaving the battery to stand for 5 minutes; adjusting the discharge rate and performing the discharge test at a C-rate of 0.2C and 2.0C separately to obtain different discharge capacities. Calculating a ratio of the capacity of the battery discharged at 2C to the capacity of the battery discharged at 0.2C to evaluate the C-rate performance.

8. Testing the deformation rate: Measuring a thickness of a half-charged fresh lithium-ion battery by use of a spiral micrometer, denoted as hi, measuring the thickness of the lithium-ion battery again by use of the spiral micrometer when the lithium-ion battery is in a fully charged state after being cycled for 400 cycles, denoted as $h_2$, and calculating the deformation rate of the lithium-ion battery as: deformation rate = $(h_2 - h_1)/h_1$.

Understandably, the testing of the above parameters of the lithium-ion battery is a technique well-known to those skilled in the art, and is not described herein in more detail. The test methods are not limited to those described herein, but may be any other appropriate test methods.

**Comparative Embodiments 1-1 to 1-10 and Embodiments 1-1 to 1-15**

The preparation methods in Comparative Embodiments 1-2 to 1-10 and Embodiments 1-1 to 1-15 are the same as the preparation method in Comparative Embodiment 1-1 except that the corresponding parameters are adjusted to change the values of A, B, and/or C.

**Table 1 (to be continued)**

| | Weight loss rate A of the negative active material layer of the negative electrode plate heated to 480 °C in the argon atmosphere (wt%) | Fluctuation value B of the relative mass percent of silicon in the silicon-based material particle (%) | Silicon content C in the negative electrode plate (wt%) | (B+C)/7 |
|---|---|---|---|---|
| Embodiment 1-1 | 2 | 10 | 4 | 2 |
| Embodiment 1-2 | 5 | 10 | 4 | 2 |
| Embodiment 1-3 | 7.8 | 10 | 4 | 2 |
| Embodiment 1-4 | 3 | 10 | 10 | 2.86 |

(continued)

| | Weight loss rate A of the negative active material layer of the negative electrode plate heated to 480 °C in the argon atmosphere (wt%) | Fluctuation value B of the relative mass percent of silicon in the silicon-based material particle (%) | Silicon content C in the negative electrode plate (wt%) | (B+C)/7 |
|---|---|---|---|---|
| Embodiment 1-5 | 6 | 10 | 10 | 2.86 |
| Embodiment 1-6 | 11.1 | 10 | 10 | 2.86 |
| Embodiment 1-7 | 4.3 | 10 | 20 | 4.29 |
| Embodiment 1-8 | 10 | 10 | 20 | 4.29 |
| Embodiment 1-9 | 16.5 | 10 | 20 | 4.29 |
| Embodiment 1-10 | 1.7 | 7 | 4 | 1.57 |
| Embodiment 1-11 | 4.5 | 7 | 4 | 1.57 |
| Embodiment 1-12 | 6 | 7 | 4 | 1.57 |
| Embodiment 1-13 | 2.8 | 15 | 4 | 2.71 |
| Embodiment 1-14 | 6 | 15 | 4 | 2.71 |
| Embodiment 1-15 | 10.2 | 15 | 4 | 2.71 |
| Comparative Embodiment 1-1 | 1 | 10 | 4 | 2 |
| Comparative Embodiment 1-2 | 10 | 10 | 4 | 2 |
| Comparative Embodiment 1-3 | 1 | 10 | 10 | 2.86 |
| Comparative Embodiment 1-4 | 14 | 10 | 10 | 2.86 |
| Comparative Embodiment 1-5 | 2 | 10 | 20 | 4.29 |
| Comparative Embodiment 1-6 | 20 | 10 | 20 | 4.29 |
| Comparative Embodiment 1-7 | 1 | 7 | 4 | 1.57 |
| Comparative Embodiment 1-8 | 8 | 7 | 4 | 1.57 |
| Comparative Embodiment 1-9 | 2 | 15 | 4 | 2.71 |
| Comparative Embodiment 1-10 | 13 | 15 | 4 | 2.71 |

**Table 1 (continued)**

| | (B+C)/1.8 | 400th-cycle capacity retention rate cycled at 25 °C (%) | 400th-cycle deformation rate cycled at 25 °C (%) | C-rate performance (2C) (%) |
|---|---|---|---|---|
| Embodiment 1-1 | 7.8 | 85.3 | 9.7 | 93.7 |
| Embodiment 1-2 | 7.8 | 92.1 | 6.1 | 92.1 |
| Embodiment 1-3 | 7.8 | 89.4 | 6.0 | 89.6 |
| Embodiment 1-4 | 11.1 | 80.1 | 11.1 | 94.1 |
| Embodiment 1-5 | 11.1 | 87.7 | 8.1 | 93.1 |
| Embodiment 1-6 | 11.1 | 86.2 | 8.0 | 83.6 |
| Embodiment 1-7 | 16.7 | 79.3 | 12.1 | 91.1 |
| Embodiment 1-8 | 16.7 | 84.7 | 9.4 | 92.4 |
| Embodiment 1-9 | 16.7 | 82.2 | 9.0 | 81.6 |
| Embodiment 1-10 | 6.1 | 88.3 | 8.2 | 94.7 |

(continued)

|  | (B+C)/1.8 | 400th-cycle capacity retention rate cycled at 25 °C (%) | 400th-cycle deformation rate cycled at 25 °C (%) | C-rate performance (2C) (%) |
|---|---|---|---|---|
| Embodiment 1-11 | 6.1 | 94.2 | 5.3 | 93.4 |
| Embodiment 1-12 | 6.1 | 91.4 | 5.0 | 85.6 |
| Embodiment 1-13 | 10.6 | 85.3 | 10.5 | 90.7 |
| Embodiment 1-14 | 10.6 | 89.4 | 8.1 | 92.1 |
| Embodiment 1-15 | 10.6 | 88.1 | 8.0 | 89.6 |
| Comparative Embodiment 1-1 | 7.8 | 71.3 | 14.5 | 78.9 |
| Comparative Embodiment 1-2 | 7.8 | 78.3 | 12.5 | 68.9 |
| Comparative Embodiment 1-3 | 11.1 | 71.3 | 15.3 | 67.9 |
| Comparative Embodiment 1-4 | 11.1 | 75.1 | 13.5 | 58.1 |
| Comparative Embodiment 1-5 | 16.7 | 65.3 | 19.2 | 69.2 |
| Comparative Embodiment 1-6 | 16.7 | 45.3 | 15.2 | 53.2 |
| Comparative Embodiment 1-7 | 6.1 | 74.1 | 13.6 | 82.9 |
| Comparative Embodiment 1-8 | 6.1 | 78.3 | 12.5 | 68.9 |
| Comparative Embodiment 1-9 | 10.6 | 71.3 | 15.5 | 78.9 |
| Comparative Embodiment 1-10 | 10.6 | 75.3 | 13.2 | 69.1 |

As can be seen by Embodiments 1-1 to 1-3 versus Comparative Embodiments 1-1 to 1-2, when the silicon content C in the negative electrode plate and the distribution homogeneity B of the silicon in the silicon-based material particle are constant, with the increase of the weight loss rate A, the cycle capacity retention rate of the lithium-ion battery increases first and then decreases, the deformation rate of the lithium-ion battery decreases first and then increases, and the C-rate performance of the lithium-ion battery is improved first and then declines. That is because, the larger the value of A, the stronger the bonding force of the negative electrode plate, the higher the stability of the SEI film on the surface of the silicon-based material particle, and the more protective the SEI film for the silicon-based material during cycling. However, when the value of A is overly large, the cycle capacity retention rate, deformation rate, and C-rate performance of the lithium-ion battery are impaired because the high content of the binder and the SEI film suppresses the transport of lithium ions and intensifies the polarization of the lithium-ion battery. The same conclusion can be obtained by comparing the Comparative Embodiments 1-3 to 1-4 with Embodiments 1-4 to 1-6, or comparing the Comparative Embodiments 1-5 to 1-6 with Embodiments 1-7 to 1-9, or comparing the Comparative Embodiments 1-7 to 1-8 with Embodiments 1-10 to 1-12, or comparing the Comparative Embodiments 1-9 to 1-10 with Embodiments 1-13 to 1-15.

In addition, the higher the silicon content in the negative electrode plate, the lower the distribution homogeneity of silicon in the silicon-based material, and the larger the amount of binder and SEI film to be used. The capacity retention rate, the deformation rate, and the C-rate performance of the lithium-ion battery are improved when $(B + C)/7 < A < (B + C)/1.8$.

**Embodiments 2-1 to 2-10**

The preparation methods in Embodiments 2-1 to 2-10 are the same as the preparation method in Embodiment 1-2 except that the corresponding parameters are adjusted to change the porosity P of the negative electrode plate and/or the silicon content C in the negative electrode plate.

**Table 2**

| | Porosity P of the negative electrode plate | Silicon content C in the negative electrode plate (wt%) | $15 \times C^{1/4}$ | 400th-cycle capacity retention rate cycled at 25 °C | 400th-cycle deformation rate cycled at 25 °C | Low-temperature performance (capacity retention rate cycled at -10 °C) |
|---|---|---|---|---|---|---|
| Embodiment 1-2 | 24.7 | 4 | 21.21 | 92.1 | 6.1 | 87.2 |
| Embodiment 2-1 | 22 | 4 | 21.21 | 91.3 | 6.4 | 83.7 |
| Embodiment 2-2 | 26 | 3 | 19.74 | 93.6 | 5.7 | 86.1 |
| Embodiment 2-3 | 32 | 3 | 19.74 | 92.4 | 6.2 | 88.6 |
| Embodiment 2-4 | 40 | 3 | 19.74 | 86.5 | 6.3 | 85.3 |
| Embodiment 2-5 | 30 | 1 | 16.60 | 94.2 | 5.3 | 92.3 |
| Embodiment 2-6 | 30 | 5 | 22.43 | 91.2 | 7.0 | 87.4 |
| Embodiment 2-7 | 30 | 10 | 26.67 | 88.2 | 8.8 | 85.4 |
| Embodiment 2-8 | 30 | 15 | 29.52 | 85.3 | 10.2 | 84.2 |
| Embodiment 2-9 | 18 | 3 | 19.74 | 80.3 | 10.8 | 78.9 |
| Embodiment 2-10 | 30 | 20 | 31.7 | 79.9 | 12.2 | 73.9 |

The volume expansion of the silicon-based material particle is approximately 300% after lithiation at a normal temperature. The huge volume effect is prone to cause problems such as negative active material layer debonding and powder shedding. Reserving a specified number of pores in the negative electrode plate can effectively alleviate the volume expansion of the silicon-based material. When the porosity of the negative electrode plate is overly low, the electrolyte solution can hardly infiltrate the negative electrode plate sufficiently, thereby increasing the transmission distance of lithium ions, and deteriorating the kinetic performance of the lithium-ion battery. As can be seen from Embodiment 1-2 versus Embodiments 2-1 to 2-10, when the porosity P of the negative electrode plate and the mass percent C of silicon in the negative electrode plate satisfy: $P > 15 \times C^{1/4}$, the cycle capacity retention rate and deformation rate of the lithium-ion batteries at a normal temperature and a low temperature are improved.

**Embodiments 3-1 to 3-5**

The preparation methods in Embodiments 3-1 to 3-5 are the same as the preparation method in Embodiment 2-6 except the mass percent X of fluoroethylene carbonate in the electrolyte solution, that is, an additional amount of fluoroethylene carbonate added into the electrolyte solution.

**Table 3**

| | Silicon content C in the negative electrode plate (wt%) | Content X of fluoroethylene carbonate in the electrolyte solution (wt%) | 400th-cycle capacity retention rate cycled at 25 °C | 400th-cycle deformation rate cycled at 25 °C | Low-temperature performance (capacity retention rate cycled at -10 °C) |
|---|---|---|---|---|---|
| Embodiment 2-6 | 5 | / | 91.2 | 7.0 | 87.4 |
| Embodiment 3-1 | 5 | 5 | 87.3 | 7.4 | 86.7 |
| Embodiment 3-2 | 5 | 10 | 92.2 | 6.0 | 89.1 |
| Embodiment 3-3 | 5 | 15 | 93.5 | 6.6 | 87.6 |
| Embodiment 3-4 | 5 | 20 | 86.8 | 9.8 | 83.3 |
| Embodiment 3-5 | 5 | 25 | 78.5 | 11.9 | 66.1 |
| Note: "/" in Table 3 indicates absence of the corresponding preparation parameter. | | | | | |

The fluoroethylene carbonate (FEC) is an important film-forming additive in the electrolyte solution. The SEI film generated by decomposition during cycling isolates the negative active material from the electrolyte solution and precludes further contact, thereby reducing depletion of lithium-ions, and playing an important role in improving the cycle performance of the lithium-ion battery. As can be seen from Embodiment 1-1 versus Embodiments 3-1 to 3-5, after the FEC is added into the electrolyte solution, when the content of the FEC in the electrolyte solution is greater than or equal to the silicon content in the negative electrode plate, the cycle capacity retention rate and deformation rate of the lithium-ion batteries at a normal temperature and a low temperature are improved. However, the content of the FEC needs to avoid being overly high because the overly high content of the FEC reduces the mobility of lithium ions in the electrolyte solution, impairs the C-rate performance, increases the deformation rate of the lithium-ion battery, and decreases the capacity retention rate at a low temperature.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

## Claims

1. An electrochemical device, comprising:

   a negative electrode plate, wherein the negative electrode plate comprises a negative active material layer, the negative active material layer comprises a silicon-based material particle and a binder, and the negative electrode plate satisfies:

   $$(B + C)/7 < A < (B + C)/1.8,$$

   wherein
   A denotes a weight loss rate of the negative active material layer of the negative electrode plate heated to 480 °C in an argon atmosphere, expressed by a mass percent; B denotes a fluctuation value of a relative mass percent of silicon in the silicon-based material particle; and C denotes a mass percent of silicon in the negative electrode plate.

2. The electrochemical device according to claim 1, wherein the weight loss rate A of the negative active material layer of the negative electrode plate heated to 480 °C in an argon atmosphere satisfies: $1.5\% \leq A \leq 18\%$.

3. The electrochemical device according to claim 1, wherein the fluctuation value B of the relative mass percent of silicon in the silicon-based material particle satisfies: $B < 16\%$.

4. The electrochemical device according to claim 1, wherein the mass percent C of silicon in the negative electrode plate satisfies: $1\% \leq C \leq 20\%$.

5. The electrochemical device according to claim 1, wherein a porosity P of the negative electrode plate and the mass percent C of silicon in the negative electrode plate satisfy: $P > 15 \times C^{1/4}$.

6. The electrochemical device according to claim 5, wherein the porosity P of the negative electrode plate satisfies: $18\% \leq P \leq 40\%$.

7. The electrochemical device according to claim 1, wherein the electrochemical device further comprises an electrolyte solution, the electrolyte solution comprises fluoroethylene carbonate, and a mass percent X of the fluoroethylene carbonate and the mass percent C of silicon in the negative electrode plate satisfy: $X \geq C$.

8. The electrolyte solution according to claim 7, wherein the mass percent X of the fluoroethylene carbonate satisfies: $2\% \leq X \leq 20\%$.

9. The electrochemical device according to claim 1, wherein the silicon-based material particle comprises silicon and carbon.

**10.** An electronic device, comprising the electrochemical device according to any one of claims 1 to 9.

## INTERNATIONAL SEARCH REPORT

| | International application No. |
|---|---|
| | **PCT/CN2021/141317** |

**A. CLASSIFICATION OF SUBJECT MATTER**

H01M 4/134(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 硅, 膨胀, 均一, 一致, 粘结, 粘合, 粘接, 黏结, 黏合, 黏接, 循环, 含量, 百分, 占比, Si, battery, silicon, expan+, homogeneous, uniform+, binder, cycle, %, percent+

**C. DOCUMENTS CONSIDERED TO BE RELEVANT**

| Category* | Citation of document, with indication, where appropriate, of the relevant passages | Relevant to claim No. |
|---|---|---|
| A | CN 113711385 A (NINGDE AMPEREX TECHNOLOGY LTD.) 26 November 2021 (2021-11-26) description, paragraphs 3-44 | 1-10 |
| A | WO 2021057929 A1 (BTR NEW MATERIAL GROUP CO., LTD. et al.) 01 April 2021 (2021-04-01) entire document | 1-10 |
| A | CN 113258052 A (TIANMU ENERGY ANODE MATERIAL CO., LTD.) 13 August 2021 (2021-08-13) entire document | 1-10 |
| A | CN 107785541 A (NANJING AMPRIUS CO., LTD.) 09 March 2018 (2018-03-09) entire document | 1-10 |
| A | CN 108550837 A (SHENZHEN BAK POWER BATTERY CO., LTD.) 18 September 2018 (2018-09-18) entire document | 1-10 |
| A | WO 2020256395 A2 (DAEJOO ELECTRONIC MATERIALS CO., LTD.) 24 December 2020 (2020-12-24) entire document | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 August 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/141317**

| Patent document cited in search report | | | Publication date (day/month/year) | Patent family member(s) | | | Publication date (day/month/year) |
|---|---|---|---|---|---|---|---|
| CN | 113711385 | A | 26 November 2021 | None | | | |
| WO | 2021057929 | A1 | 01 April 2021 | KR | 20210107115 | A | 31 August 2021 |
| | | | | EP | 3907792 | A1 | 10 November 2021 |
| | | | | US | 2022109140 | A1 | 07 April 2022 |
| | | | | CN | 112563476 | A | 26 March 2021 |
| | | | | EP | 3907792 | A4 | 04 May 2022 |
| CN | 113258052 | A | 13 August 2021 | None | | | |
| CN | 107785541 | A | 09 March 2018 | CN | 107785541 | B | 01 June 2021 |
| CN | 108550837 | A | 18 September 2018 | None | | | |
| WO | 2020256395 | A2 | 24 December 2020 | KR | 20200144855 | A | 30 December 2020 |
| | | | | KR | 20210146874 | A | 06 December 2021 |
| | | | | WO | 2020256395 | A3 | 04 March 2021 |
| | | | | KR | 102374350 | B1 | 16 March 2022 |

Form PCT/ISA/210 (patent family annex) (January 2015)